# EUROPEAN PATENT SPECIFICATION

(11) **EP 0 261 685 B1**
(45) Date of publication and mention of the grant of the patent: **27.07.1994**
(21) Application number: 87113998.6
(22) Date of filing: 24.09.1987
(51) Int. Cl.: G06F 9/38

(54) **Microprocessor system**
Mikroprozessorsystem
Système microprocesseur

(30) Priority: 24.09.1986 JP 223587/86
(43) Date of publication of application: 30.03.1988
(73) Proprietor: HITACHI, LTD., Chiyoda-ku, Tokyo 101 (JP); HITACHI MICROCOMPUTER SYSTEM LTD., Kodaira-shi Tokyo (JP)
(72) Inventor: Hashimoto, Kouzi, Mitaka-shi Tokyo (JP); Hasegawa, Atsushi, Koganei-shi Tokyo (JP); Kawasaki, Ikuya, Kodaira-shi Tokyo (JP); Iwasaki, Kazuhiko, 2-chome Hachiohji-shi Tokyo (JP)
(74) Representative: Strehl Schübel-Hopf Groening & Partner

(56) References cited:
- EP-A- 0 021 365
- EP-A- 0 139 254
- FR-A- 2 422 205
- US-A- 4 270 167
- US-A- 4 338 675
- WESCON 86/ Conference Record vol. 30, 18 November 1986, LOS ANGELES US pages35/1 - 1-13; B.BEIMS: "The Floating-Point Performance Standard Gets Even Faster
- IBM TECHNICAL DISCLOSURE BULLETIN. vol. 22, no. 6, November 1979, NEW YORK USpages 2415 - 2416; R.W.DOWNES et al.: "Extended Function Adapter"
- WESCON CONFERENCE RECORD vol. 24, 16 September 1980, ANAHEIM US pages 1 - 8; D.BURSKY: "Enhancing CPU Performance: Slave, Co-processor, Smart I/OAlternatives"

## Description

The present invention relates to a microprocessor system, and in particular, to a data transfer control technology therein, for example, to a technology effectively applicable to a data transfer control of a data transfer between a plurality of registers included in a coprocessor and external storage means.

A coprocessor is connected to a master processor such as a general-purpose data processor to enable a register set and an instruction set to be expanded, thereby adding a new processing capability to the processor.

There has been a method to interface between the master processor and the coprocessor in which the coprocessor monitors the instruction execution state of the master processor by use of a status signal. When an instruction for the coprocessor is detected, the instruction is caused to be executed by the coprocessor, and if a bus access is necessary at the execution of the instruction, the coprocessor operates as a local bus master in place of the master processor so as to generate a bus access cycle. In addition, according to another method to interface between the master processor and the coprocessor, the main processor is to detect an instruction for the coprocessor and to execute all bus cycles for a transfer of a command for the coprocessor and for a transfer of data between the memory and the coprocessor. The published references in which the coprocessor is described include "LSI Handbook", The OHM-Sha, Ltd., Nov. 30, 1984, pp. 558-559 and "Microcomputer Handbook", The OHM-Sha, Ltd., Dec. 25, 1986, pp. 680-681.

From US-A-4 338 675, there is known a system and a method as described in the preamble of claim 1 and claim 8, respectively. The known system includes a processor and a coprocessor both coupled to a common bus. The coprocessor is a unit which processes a specific type of instructions only. Upon detection of such a specific instruction, the coprocessor gains control of the common bus and performs any memory read or write cycles required. The master processor calculates all the effective addresses and performs a dummy read, while the coprocessor captures first the addresses and then the data.

### SUMMARY OF THE INVENTION

The present inventors have discussed a case where the coprocessor effects transfer of a plurality of data items to and from the master processor and the memory in a system as described above in which the master processor executes the bus access cycle for the coprocessor, for example, including an operation to send an address signal to the memory. According to the conclusion of the discussion, since the system has a characteristic that the master processor generates and controls the bus access cycle and the coprocessor, on the other hand, achieves a transfer of actual data, in a case where only the master processor recognizes and controls a sequence of data transfers, it has been found that a command must be issued to the coprocessor for each data transfer and that the efficiency of a sequence of data transfers is reduced because of the increase of the command issuances. Due to the same reason, in a case where only the master processor recognizes and controls a sequence of data transfers, the master processor cannot recognize by itself a condition whether or not the necessary transfer cycle has been finished, and hence the master processor must obtain an information indicating the end of a sequence of data transfer cycles from the coprocessor. In this situation, the following problems have been clarified that the transfer of the information is undesirably delayed in a local signal line and a data input/output buffer, that the initiation of the subsequent operation to be executed after the sequence of data transfers is delayed, and that the operation efficiency of the overall system is therefore lowered.

It is therefore an object of the present invention to provide a system in a computer system in which the master processor controls the bus access cycle for the coprocessor for improving the efficiency of a data transfer associated with the coprocessor.

Above and other objects and new features of the present invention will be apparent from the detailed description taken inconjunction with the accompanying drawings.

Outline of the representative features of the present invention disclosed by this specification will be briefly described.

That is, when the coprocessor effects a sequence of transfers of plural data items to and from the master processor and the memory according to the bus access cycle initiated by the master processor, the coprocessor is provided therein an information indication a data storage location which is a data transfer source or a data transfer destination; furthermore, the master processor and the coprocessor independently monitor the transfer operations to detect the end of the sequence of data transfer operations. In this processing, the information necessary for the bus access cycle initiated by the master processor can be contained in a data transfer instruction; moreover, the information included in the data transfer instruction can be supplied as a data transfer command to the coprocessor. In this case, the end of the sequence of data transfer operations independently monitored by the master processor and the coprocessor can be notified according to the field information indicating a plurality of data storage locations in the coprocessor, said field information being included in the data transfer instruction and the data transfer command.

As a consequence, when executing a sequence of plural data transfer operations, the coprocessor need not receive the command from the master processor each time a data item is transferred; moreover, the coprocessor need not notify the master processor the end of the sequence of data transfer cycles. Consequently, in a case where the processor generates and controls the bus access cycle on one hand and the coprocessor effects the actual data communication on the other hand, the system achieves to prevent the condition that leads to the minimization of the data transfer efficiency due to the increase of the command issuances, which may occur when only the master processor recognizes and controls the sequence of data transfers. In addition, the system further effects to prevent the situation that the supply of the end indication of the sequence of data transfer cycles to the master processor is undesirably delayed, which may take place when only the coprocessor recognizes and controls the sequence of data transfers. As a result, improvement of the efficiency of the sequence of data transfers is realized; furthermore, the next operation necessary to be executed after the data transfer operation can be immediately initiated, thereby achieving the improvement of the operation efficiency of the overall system.

### BRIEF DESCRIPTION OF THE DRAWINGS

The present invention will be apparent from the following detailed description taken in conjunction with the accompanying drawings in which:
FIG. 1 is a schematic block diagram illustrating an embodiment of the microprocessor system according to the present invention;
FIG. 2 is a schematic diagram illustrating an example of the execution unit included in the master processor;
FIG. 3 is a schematic diagram showing an example of the execution unit included in the master processor;
FIG. 4 is a schematic diagram showing an example of the format of a data transfer instruction to be fetched by the master processor substantially for the coprocessor;
FIG. 5 is a schematic diagram depicting an example of the format of a command to be generated by the master processor for the coprocessor;
FIG. 6 is a flowchart useful for explaining the operations of the master processor for the data transfer; and
FIG. 7 is a flowchart useful for explaining the operations of the coprocessor in the data transfer.

### DESCRIPTION OF THE PREFERRED EMBODIMENT

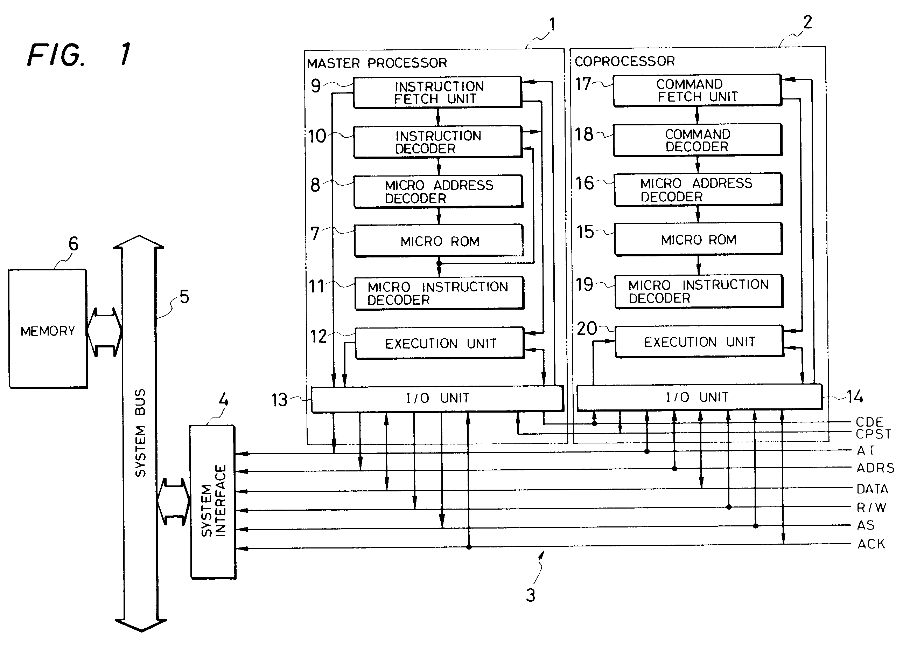

The microprocessor system of FIG. 1, although not limited to, comprises a master processor 1 such as a general-purpose processor and a coprocessor 2 closely linked thereto by means of a local bus 3, the coprocessor 2 having functions including the floating operation, the multiprecision operation of a transcendental function, and so forth. The local bus 3 is linked via a system interface 4 to a system bus 5. In FIG. 1, the system is representatively linked to a memory 6 comprising, although not limited to, a random access memory (RAM).

A macro instruction such as a machine language instruction supplied from the system side is fetched by the master processor 1. In a case where the fetched instruction is a coprocessor instruction, the master processor 1, although not limited to, separates therefrom fields necessary for the coprocessor 2 to generate a command and then supplies the command to the coprocessor 2. The master processor 1 controls all bus cycles at a transfer of a command to the coprocessor 2, a data transfer between the memory 6 and the coprocessor 2, and so forth.

The master processor 1 is provided with a micro ROM 7 in which microprograms are stored. The micro ROM 7 is accessed from the micro address decoder 8, which causes micro instructions constituting the microprograms to be sequentially read.

In FIG. 1, reference numeral 9 indicates an instruction fetch unit including an FIFO register (not shown) used to prefetch a macro instruction according to a pipeline processing or an instruction prefetch control. The micro address decoder 8 is supplied with an address signal obtained by decoding in an instruction decoder 10 an operation code of the macro instruction fetched into the instruction fetch unit 9. The micro address decoder 8 decodes the address signal to read from the micro ROM 7 the first instruction among a sequence of micro instructions to execute the macro instruction. The micro instruction thus read is supplied to the micro instruction decoder 11 and is decoded therein. As a result, the micro instruction decoder 11 supplied control signals necessary for the execution of the instruction to the execution unit 12.

Each of the second and subsequent micro instructions included in the series of micro instructions corresponding to the macro instruction is indicated when the code of the next address field of the micro instruction previously read is supplied to the instruction decoder 10. The instruction decoder 10 includes a multiplexer (not shown) effecting for an output a selection between a macro instruction and a code of the next address field included in a micro instruction. Consequently, based on the code of the next address field thus sequentially selected by the multiplexer, a micro instruction is sequentially read from the micro ROM 7. Operations of the execution unit 12 and the like are controlled according to a predetermined order based on the micro instruction thus read and the control signals corresponding thereto.

Through the operations above, a macro instruction such as a transfer instruction or an arithmetic instruction is executed. The master processor 1 is linked to the local bus via an input/output unit 13.

The coprocessor 2 is linked via an input/output unit 14 to the local bus 3. The coprocessor 2 is provided with a micro ROM 15 in which microprograms are stored. The micro ROM 15 is accessed from the micro address decoder 16, which causes the micro instructions constituting the microprograms to be sequentially read.

In FIG. 1, reference numeral 17 indicates a command fetch unit to fetch a command generated by the master processor 1. The micro address decoder 16 is supplied with an address signal attained by decoding in the command decoder 18 the operation code of the command fetched into the command fetch unit 17. The micro address decoder 16 decodes the address signal to read from the micro ROM 15 the first instruction of a series of micro instructions to execute the command. The micro instruction thus read is supplied to the micro instruction decoder 19 and is then decoded therein. As a result, the micro instruction decoder 19 supplied to the execution unit 20 and the like the control signals necessary for the execution of the micro instruction.

Each of the second and subsequent micro instructions included in the series of micro instructions corresponding to the macro instruction is indicated when the code of the next address field of the micro instruction previously read is supplied to the command decoder 18. The command decoder 18 includes a multiplexer (not shown) effecting for an output a selection between a macro instruction and a code of the next address field included in a micro instruction. Consequently, based on the code of the next address field thus sequentially selected by the multiplexer, a micro instruction is sequentially read from the micro ROM 15. Operations of the execution unit 20 and the like are controlled according to a predetermined order based on the micro instruction thus read and the control signals corresponding thereto.

Through the operations above, the coprocessor 2 executes a command such as a data transfer or an arithmetic operation supplied from the master processor 1. The master processor 1 executes the control of the bus access cycle necessary for the operation.

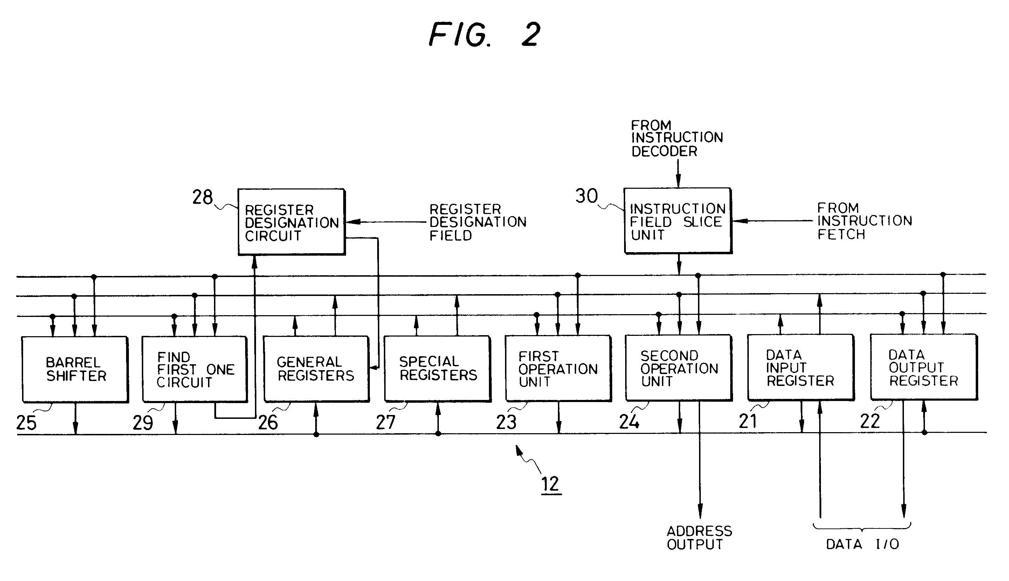

The execution unit 12 included in the master processor 1 is configured, for example, as shown in FIG. 2. Namely, four internal buses linked to a data input register 21 and to a data output register 22 connected to the input unit 13 are linked to a first operation unit, a second operation unit 24 dedicately used to calculate an address, a barrel shifter 25, a group of general-purpose registers 26 including such general-purpose registers as a plurality of temporary registers, and a group of special registers 27 including a program counter, a status register, and a stack pointer.

The group of general-purpose registers 26 is subjected to a register designation by a register designation circuit 28. The register designation circuit 28 effects two kinds of register designations. The first specification method is achieved based on an information contained in a register designation field included in an instruction, whereas the second specification method is accomplished based on an output from the find first one circuit 29 which decodes a register list comprising an information to designate a plurality of general-purpose registers. For the register list and the find first one circuit 29, details will be described later.

In FIG. 2, reference numeral 30 stands for an instruction field slice unit. When an instruction fetched into the instruction fetch unit is an instruction for the coprocessor 2, the instruction field slice unit 30 slices predetermined fields from the pertinent instruction to generate a command for the coprocessor 2. Moreover, the immediate data and memory address designation information contained in the instruction and the register list are sliced and are supplied to the first operation unit 23, the second operation unit 24, the find first one circuit 29, and so forth. In addition, the information about the size of data to be transferred or to be subjected to the operation and the information about the data read/write operation are supplied via the instruction decoder 10.

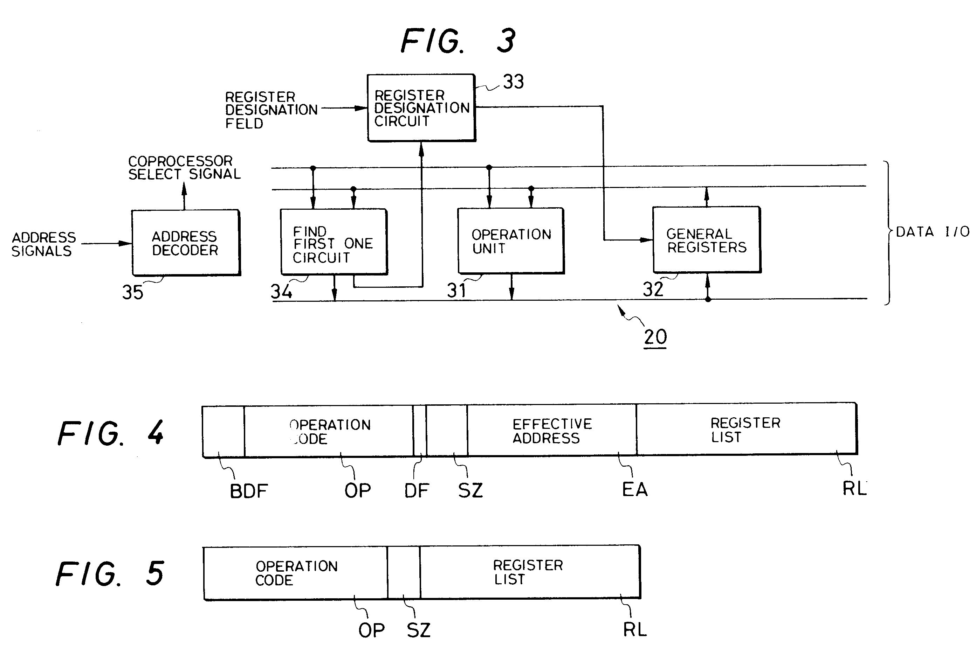

The execution unit 20 included in the coprocessor 2 comprises, for example, a configuration shown in FIG. 3. Namely, the three buses connected to the input/output unit 14 are linked to a group of general-purpose registers 32 including general-purpose registers such as a plurality of temporary registers. Register designation for the group of general-purpose registers 32 is effected by a register designation circuit 33. The register designation methods in the register designation circuit 33 includes two methods, namely, a designation based on an information of the register designation field contained in a command supplied from the master processor and a designation based on an output from the find first one circuit 34 decoding the register list which is an information for designating a plurality of registers. Details about the find first one circuit 34 will be also described later. Incidentally, although not shown, the execution unit 20 also is provided with a slice unit to slice a command field, various control registers, and the like.

The master processor 1 achieves an operation selection for the coprocessor 2 according to a selected signal outputted from an address decoder 35 (FIG. 3) receiving an address signal assigned to the coprocessor 2 sent from the master processor 1 when the master processor 1 fetches an instruction for the coprocessor 2. When the operation is selected, the coprocessor fetches a command supplied from the master processor 1 and is controlled to be in a state in which the pertinent command can be executed.

A description will be given here a data transfer configuration in which the coprocessor 2 performs input/output operations according to the bus access cycle activated by the master processor 1.

Although not particularly limited to, the data transfer configuration includes five steps as follows.
(1) The coprocessor 2 receives a command and an instruction address from the master processor 1.
(2) The coprocessor 2 receives data other than the command and the instruction address from the master processor 1.
(3) The coprocessor 2 transfers data to the master processor 1.
(4) The coprocessor 2 writes data in the memory 6.
(5) The coprocessor 2 receives data from the memory 6.

For the data transfer at each step described above, as shown in FIG. 1, an address signal ADRS, an address strobe signal AS indicating the output determination of the address signal ADRS, and a read/write signal R/W indicating the direction of the data transfer are delivered from the master processor 1. That is, at various data transfers, the master processor 1 activates and controls the bus access cycle. When initiating a bus access cycle the master processor 1 outputs an access type signal AT to enable an identification that the transfer objective of the pertinent operation is a command, an instruction address, or other data. The data DATA as the transfer objective is communicated between the master processor 1, the coprocessor 2, and the memory 6 according to the execution contents of the instruction and the command in the master processor 1 and the coprocessor 2. Incidentally, the instruction address described above is an address of a macro instruction corresponding to a command to be executed by the coprocessor. Since a pipeline processing is executed, the master processor 1 cannot keep the instruction address itself corresponding to the command issued to the coprocessor 2. Due to the provision that the coprocessor 2 keeps the instruction address, the post processing and the exception processing required at an occurrence of an error during a command execution can be smoothly executed.

For a data transfer, as shown in FIG. 1, an aknowledge signal ACK indicating that a data transfer is completed is communicated. The acknowledge signal ACK is, although not particularly limited to, outputted from the coprocessor in the transfer steps (1) - (3) above and is recognized by the master processor 1. On detecting an acknowledge signal ACK at the active level (a level indicating the transfer completion), the master processor 1 terminates the pertinent data transfer cycle. Moreover, in the data transfer steps (4) - (5) above, the memory 6 outputs an acknowledge signal ACK, which is then recognized by both the master processor 1 and the coprocessor 2. In this case, on detecting an acknowledge signal ACK at the active level, the master processor 1 terminates at a predetermine timing the bus access cycle for the data transfer cycle. In addition, on receiving an acknowledge signal ACK at the active level, the coprocessor 2 terminates at a predetermined timing the operation for the data transfer cycle. Particularly, in the case of the data transfer step (5) above, when an acknowledge signal ACK at the active level is detected, the coprocessor 2 fetches therein the data read from the memory 6.

Although not particularly limited to, the master processor 1 and the coprocessor 2 are so designed to synchronously operate according to the same clock signal. In the synchronous operation, consideration has been given to a provision that the coprocessor can output the necessary data at a timing associated with the bus access cycle controlled by the master processor 1; in other words, in the write cycle for which the coprocessor 2 is the data transfer source, the coprocessor 2 can output the necessary data at the same timing as that of the write cycle for which the master processor 1 is the data transfer source. That is, as shown in FIG. 1, the master processor 1 supplies a coprocessor data enable signal CDE to the coprocessor 2, thereby indicating the start point of the write cycle for which the coprocessor 2 is the data transfer source. In a case where the coprocessor 2 judges the start point of the write cycle by use of the address strobe signal AS and the read/write signal R/W, the coprocessor 2 can substantially initiate an operation to judge whether the cycle is the write cycle or not only after the transfer destination address is determined on the bus, which delays an output timing for the necessary data.

The status interface between the master processor 1 and the coprocessor 2 is provided by a coprocessor status CPST. The coprocessor status CPST indicates, but not limited to, four kinds of status, namely, command accept meaning a command acceptance by the coprocessor 2, busy indicating that a command is in execution by the coprocessor 2, data ready meaning that the data size and type of data to be transferred have been completely converted by the coprocessor 2, and error occurrence, indicating that an error such as a data overflow has occurred during a command execution.

Although the coprocessor system of this embodiment executes various instructions such as a data transfer instruction, an arithmetic instruction, and a branch instruction, the following paragraphs describe instructions associated with the register list directly related to the present invention.

The instruction format shown in FIG. 4 is an example of the format of a data transfer instruction to be substantially executed by the coprocessor 2. This instruction is an instruction which indicates to effect a data transfer between a plurality of general-purpose registers in the coprocessor 2 designated by the register list and the memory 6. The pertinent instruction includes an instruction belonging designation field BDF, an operation code designation field OP for which an operation code indicating the content of operation is designated, a size designation field SZ to designate the data size of the source operand, a direction field DF to designate a read operation or a write operation, an address designation field EA to designate the first address of the memory to be used as the source or the destination, and a register list RL to designate a plurality of general-purpose registers to be used for the date transfer with the memory.

The register list RL comprises, although not particularly limited to, a 1-byte field of which the bits are respectively assigned to 16 general-purpose registers included in the group of general-purpose registers and when a predetermined bit of the field is "1", the general-purpose register corresponding to the bit is indicated to be designated.

When the instruction shown in FIG. 4 is fetched by the master processor 1 and is detected to be a data transfer instruction to be substantially executed by the coprocessor 2 based on the decode result of the instruction belonging designation field BDF, the instruction field slice unit 30 slices a predetermined instruction field shown in FIG. 4 so as to generate a command for the coprocessor 2. The command has, but not particularly limited to, a format shown in FIG. 5 and comprises the operation code designation field OP, the size designation field SZ, and the register list RL.

In the master processor 1, the register list RL sliced out from the instruction of FIG. 4 is set to the find first one circuit 29. In addition, the register list RL included in the command of FIG. 5 to be transferred to the coprocessor 2 is sliced in the coprocessor 2 and is set to the find first one circuit 34.

The find first one circuits 29 and 34 sequentially supply the register designation circuits 28 and 33 with data coresponding to the register numbers respectively designated by the respective register lists RL's for each data transfer cycle so as to control the register designation operations and further monitor the number of a sequence of data transfers to all general-purpose registers designated by the respective register lists RL's or the completion of a sequence of data transfer operations. More concretely, the position of the upper-most bit in the register lists RL's to which "1" has been set is detected and information corresponding to the number of the register associated with the detected position is respectively supplied to the register designation circuits 28 and 33. Furthermore, at a timing after an execution of the input/output operation of the data, the register lists RL's are updated by changing the bit "1" previously detected to be "0". This enables to designate the general-purpose register to be subjected to the subsequent data transfer. Moreover, in order to monitor the number of a sequence of data transfers to all general-purpose registers designated by the respective register lists RL's or the completion of a sequence of data transfer operations, it is detected whetner or not all bits constituting the register list RL's are "0". When a condition that all bits of the register lists RL's are "0" is detected respectively by the find first one circuits 29 and 34, flag registers not shown are set, which causes the master processor 1 and the coprocessor 2 to independently terminate the sequence of data transfer instructions and command executions. That is, the master processor 1, based on the output from the find first one circuit 29 included therein, interrupts the update processing of a sequence of operand addresses for the coprocessor 2 and thereby terminates the processing to activate the bus access cycle. The coprocessor 2, based on the output from the find first one circuit 34 included therein, supplies the master processor 1 by means of the coprocessor status CPST with a status indicating that the command can be executed.

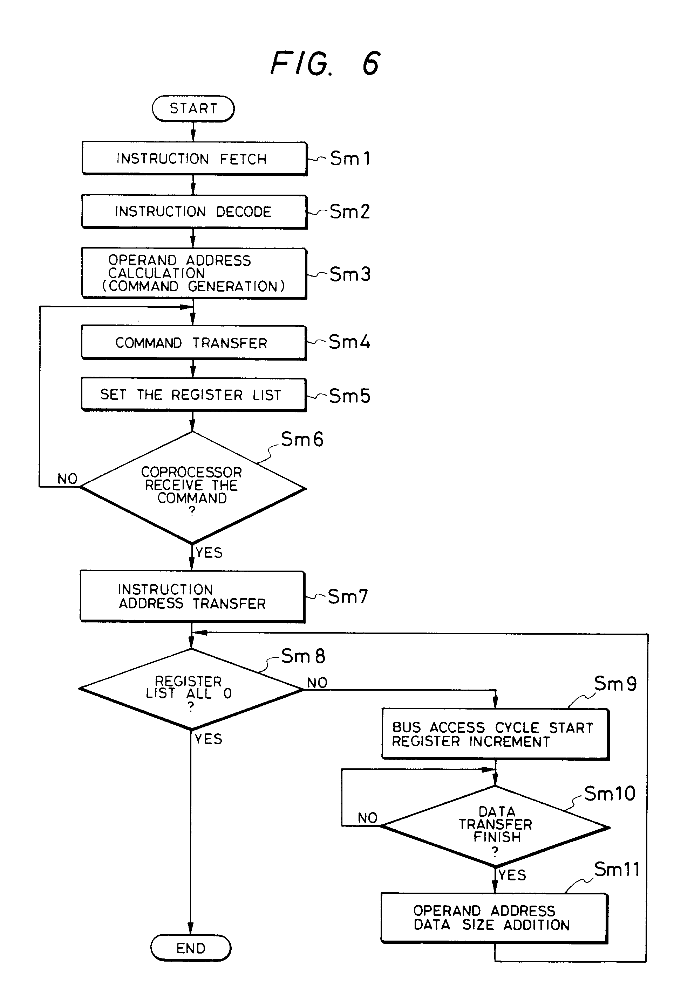

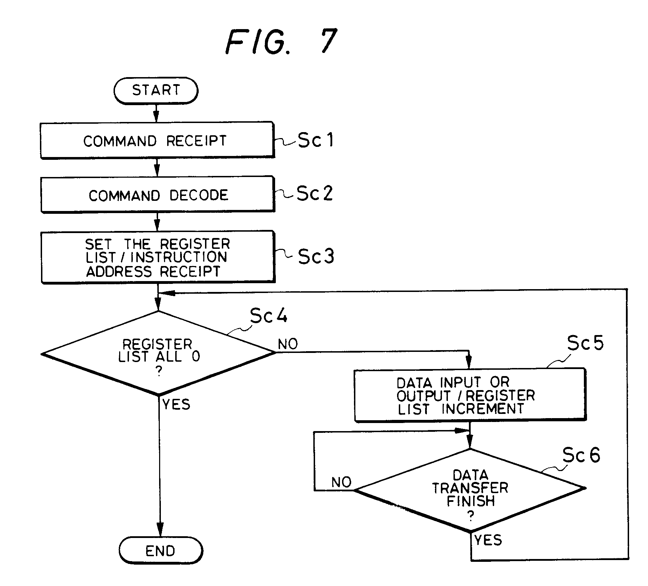

Next, referring now to FIGS. 6-7, a detailed description will be further given of the operation sequences for the master processor 1 and the coprocessor 2 to effect processing as classified into the data transfer steps (4) and (5) based on the instruction of FIG. 4 and the command of FIG. 5. FIG. 6 shows the operation sequence of the master processor 1, whereas FIG. 7 illustrates the operation sequence of the coprocessor 2.

When the data transfer instruction shown in FIG. 4 is fetched by the master processor (step Sm1), the master processor 1 decodes by means of the instruction decoder the information of the instruction belonging designation field and the operation code included in the instruction code (step Sm2). As a result, the master processor 1 recognized that the pertinent instruction is an instruction to be substantially executed by the coprocessor 2 and then sequentially reads the micro instructions from the micro ROM 7, thereby executing an operation sequence corresponding to the operation code.

That is, first, based on the information of the address designation field EA included in the data transfer instruction, the first operand address (an address in the memory 6) is calculated for the data transfer and the instruction field slice unit 30 generates a command for the coprocessor 2 (step Sm3). This command has a command having the format shown in FIG. 5.

Next, the command is transferred to coprocessor (step (Sm4) and the register list RL sliced by the instruction field slice unit 30 is set to the find first one circuit 29 (step Sm5); thereafter, the transfer result of the command is judged by use of the busy flag and the like included in the coprocessor status (step Sm6) and then the steps Sm4, Sm5, and Sm6 are repeatedly effected until the reception of the command is completed. When the completion of the command reception by the coprocessor 2 is judged in the step Sm6, the address of the pertinent instruction is then transferred from the master processor 1 to the coprocessor 2 (step Sm7).

In the coprocessor 2, when the command transferred in the step Sm4 of the master processor 1 is received by the command fetch unit 17 in synchronism with the transfer timing (step Sc1), the coprocessor 2 decodes by means of the command decoder 18 the operation code included in the command (step Sc2). This causes the coprocessor 2 to sequentially read the micro instructions from the micro ROM 15 and then executes the operation sequence depending on the operation code. First, the instruction address transferred in the step Sm7 of the master processor 1 is received by the coprocessor 2 in synchronism with the transfer timing and then the register list RL sliced from the command in the coprocessor 2 is set to the find first one circuit 34 (step Sc3).

After the operation above, the master processor 1 judges whether or not all bits of the register list RL set to the find first one circuit 29 are "0" (step Sm8). If this is not the case, the bus access cycle is generated and controlled for the operand transfer by the coprocessor 2 and then the register list RL is updated in the find first one circuit 29 (step Sm9). The generation and control of the bus access cycle for the operand transfer by the coprocessor 2 include here such operations as an output of the operand address calculated in the step Sm3, an output of the address strobe signal AS corresponding to the determination of the pertinent address signal on the bus, and an output of the read/write signal R/W. The find first one circuit 29 included in the master processor 1 dedicatedly monitors whether or not all bits of the register list RL and "0", namely, whether or not a sequence of data transfers succeeding the pertinent instruction has been completely executed. This find first one circuit 29 does not effect the control operation to designate general-purpose registers. The decode result of the find first one circuit 29 is not supplied to the register designation circuit 28.

In this situation, like the master processor 2, the coprocessor 2 judges whether or not all bits of the register list RL set to the find first one circuit 34 are "0" (step Sc4). If this is not the case, the input/output control of the operand is achieved according to the bus access cycles activated by the master processor 1; thereafter, the register list RL is updated in the find first one circuit 34 (step Sc5). During the input/output control of the operand by the coprocessor 2, the find first one circuit 34 detects the position of the upper-most bit in the register list RL to which "1" has been set and then supplies the designation circuit 33 with an information corresponding to the number of the register associated with the detection position, thereby controlling the operation in the coprocessor 2 to designate registers to output or to input the operand. In this case, if the operand transfer operation is a write operation; in other words, if the coprocessor 2 writes data in the memory, the data output timing of the coprocessor 2 is supplied by a coprocessor data enable signal CDE outputted from the master processor 1.

The master processor 1, after the generation of the bus access cycle, judges whether or not the data transfer operation has been completed in the pertinent cycle based on the acknowledge signal ACK (meaning that the data has been read from or written in the memory 6) ouputted from the memory 6 (step Sm10). If the completion of the data transfer operation is judged, the data size is added to the operand address (step Sm11) to prepare for the next activation of the bus access cycle. On the other hand, the coprocessor 2 similarly judges based on the acknowledge signal ACK outputted from the memory 6 whether or not the data transfer operation in the pertinent data cycle has been completed (step Sc6). Incidentally, in a case where the coprocessor 2 fetches the data transferred from the memory 6 (for a data write operation), the pertinent transfer data is fetched into a predetermined general-purpose register designated by the find first one circuit 34 based on the acknowledge signal ACK.

The master processor 1 returns from the step Sm11 to the step Sm8 so as to judge whether or not all bits of the updated register list RL are "0". In other words, the master processor 1 judges whether or not there remain data transfer elements of the coprocessor 2, namely, whether or not it is further required to activate a bus access cycle for the coprocessor 2. The coprocessor 2 returns from the step Sc6 to the step Sc4 to judge whether or not all bits of the updated register list RL are "0". If this is not the case, the register list RL is used to designate general-purpose registers for the next data transfer.

As described above, the master processor 1 and the coprocessor 2 independently judge the remaining items of the data transfer elements. If it has been judged that another data transfer is necessary, the master processor 1 activates the bus access cycle in the same fashion as described above and the coprocessor 2 effects the communication of data according to the bus access cycle thus activated.

If it has been judged by both the master processor 1 and the coprocessor 2 that all bits of the respective register lists RL's are "0", the execution of the instruction and command is terminated without achieving the intercommunication of the information therebetween.

According to the description above, the following effects can be attained.
(1) When the coprocessor communicates a sequence of plural data items with the master processor and the memory according to the bus access cycle activated by the master processor, the coprocessor is supplied therein an information indicating the data storage position as the data transfer source or the data transfer destination; furthermore, the master processor and the coprocessor independently monitor the number of the sequence of data transfers or the completion of the sequence of data transfer operations. As a consequence, when the coprocessor executes a sequence of plural data transfer operations, it is not necessary for the coprocessor to receive a command from the master processor each time a data item is transferred; consequently, in a case where the master processor generates and controls the bus access cycle on one hand and the coprocessor effects the actual data communication on the other hand, there is obtained an effect to prevent the reduction of the data transfer efficiency due to the increase of the command issuances, which may occur when the number of the sequence of data transfers is recognized only by the master processor for the control thereof.
(2) Furthermore, in the case above, since the coprocessor need not indicate the end of the sequence of data transfer cycles to the master processor, the signal to indicate the end of the sequence of data transfer cycles to the master processor is not undesirably delayed, which may occur when only the coprocessor recognizes and controls the number of the sequence of data transfers; consequently, there is obtained an effect as a result that the next operation required to be started after the sequence of the data transfer operations can be immediately effected.
(3) According to the effects of (1) and (2) above, there is obtained an effect that the operation efficiency of the overall coprocessor system can be improved.

Although the invention made by the present inventor has be concretely described based on the embodiment, the present invention is not restricted by the embodiment and it is to be appreciated that various changes and modifications thereof are possible without departing from the scope and spirit of the invention.

For example, although the find first one circuits 29 and 34 also effecting the control of the register designation circuit have been adopted as means to monitor the number of data transfers or the completion of the sequence of data transfer operations, such means can be modified to have a configuration in which the number of data transfers is counted and a condition that the count value reaches a predetermined value is detected. Moreover, the means may also effect the control of the register designation circuit.

In addition, the information indicating a plurality of data transfer sources and destinations is not restricted by the register list in the form described in conjunction with the embodiment, namely, the information may be in a form to directly designate a plurality of register numbers. In this case, data indicating the number of necessary data transfers is separately required; however, such data may be supplied as an operand without containing the data in an instruction or a command.

Furthermore, in the embodiment above, although description has been given of an example of the data transfer instruction between the memory and the coprocessor, the present invention is also applicable to a case of a transfer of a command and other data between the master processor and the coprocessor and further to an execution of an arithmetic instruction substantially requiring a transfer of an operand.

Although the description above has been given of a case where the invention primarily made by the present invention is applied to the data transfer control between a plurality of general-purpose registers in the coprocessor and the memory which is the utilization field as the background of the present invention, the present invention is not restricted by this case but it can be widely applied to the data transfer control of a case in which other data storage means such as a peripheral unit other than the memory and control registers in the coprocessor are used. In short, the present invention is applicable under a condition where at least a master processor and a coprocessor are included.

While the present invention has been described with reference to the particular illustrative embodiment, it is not restricted by the embodiment but only by the appended claims.

## Claims

1. A microprocessor system comprising:
a bus (3);
a coprocessor (2) coupled to the bus;
a master processor (1) coupled to the bus; and
an external device (6) coupled to the bus;
the master processor (1) including
transfer means (9) for transferring a command to the coprocessor said command being based on an instruction fetched by fetching means (9) for the co-processor; and
calculation means (12) for executing the calculation of an address of the external device for a data transfer operation;
**characterized** in
that the master processor (1) executes the bus access cycle for the coprocessor;
that the master processor (1) comprises
first set means (29) set with a data transfer number included in the command indicating the data transfer operations to be performed between the coprocessor (2) and the external device (6), wherein the master processor includes means for judging completion of the data transfer operation independently of the coprocessor in accordance with the set data transfer number of the first set means;
and that the coprocessor (2) includes
second set means (34) set with the data transfer number included in the command provided from the master processor, wherein the coprocessor includes means for judging completion of data transfer operation effected between an internal section (32) of the coprocessor and the external device (6) in accordance with the set data transfer number of the second set means,
wherein the data transfer operation between the coprocessor and the external device is executed through the bus without passing the master processor.

2. A microprocessor system according to claim 1, wherein each of the first and second set means is a find first set bit circuit (29, 34),
and wherein the find first set bit circuit includes means for effecting for each data transfer operation a code inversion on a predetermined code bit included in a plurality of bit sets which have been set to the find first set bit circuit so as to update the plurality of bit sets, and means for effecting a judgement of a completion of the sequence of the data transfer operations based on a condition that each of the updated bit sets does not include the predetermined code bit.

3. A microprocessor system according to claim 2, wherein said internal section of the coprocessor includes a plurality of data storage means (32) for storing data, and wherein the plurality of bit sets designate a predetermined one of the plurality of data storage means.

4. A microprocessor system according to claim 3, wherein each of the find first set bit circuits (29, 34) includes means for decoding the plurality of bit sets to designate one of the data storage means (32) of the coprocessor.

5. A microprocessor system according to claim 2, wherein the master processor (1) includes means for forming the command to be provided to the coprocessor on the basis of the instruction fetched by the master processor, the command including a plurality of bit sets to be set into the find first set bit circuit (34) of the coprocessor (2).

6. A microprocessor system according to claim 3, wherein the plurality of internal data storage means include a plurality of general-purpose registers (32).

7. A microprocessor system according to claim 1, wherein the external device is a memory means (6) for storing data.

8. In a microprocessor system which includes a bus (3), a master processor (1) coupled to the bus, a coprocessor (2) coupled to the bus and an external device (6) coupled to the bus, a method for executing a sequence of data transfer operations between the external device and a plurality of data storage means (32) included in the coprocessor, the method comprising the steps of:
(a) fetching a predetermined instruction for the coprocessor (2);
(b) generating a command for the coprocessor (2) based on the instruction fetched in the fetch step (a) by the master processor (1); and
(c) providing the command generated in the command step (b) to the coprocessor;
the method being **characterized**
in that the bus access cycles are activated by the master processor (1); and
in that the method comprises further the steps of:
(d) monitoring, by the master processor (1), an end of the sequence of data transfer operations based on a data transfer number included in the instruction for the coprocessor (2); and
(e) monitoring, by the coprocessor (2), an end of the sequence of data transfer operations based on a data transfer number included in the command independently of the monitoring carried out by the master processor, the data transfer operations between the coprocessor and the external device being executed through the bus without passing the master processor.

9. A method according to claim 8, wherein the monitoring to be effected by the master processor (1) includes a step for stopping an activation of a further bus access cycle after the detection of an end of the sequence of data transfer operations.

10. A method according to claim 8, wherein the monitoring by the coprocessor (2) includes a step for stopping an activation of a further bus access cycle after the detection of an end of the sequence of data transfer operations.

11. A method according to claim 8, further including a step operatively based on the data included in the command for judging and for designating, for each data transfer cycle, data storage means used as a data transfer source or destination in the coprocessor.

12. A method according to claim 11, wherein the step for judging and for designating, for each data transfer cycle, the data storage means comprises:
effecting, for each data transfer operation, a code inversion on a predetermined code bit included in the data; and
effecting a judgement of a completion of operations for each data transfer operation based on a condition that the data do not include the predetermined code bit.

13. A method according to claim 12, wherein the plurality of bits included in the data indicate, based on a combination of each bit code, a predetermined one of the data storage means included in the coprocessor (2).

## Patentansprüche

1. Mikroprozessorsystem, umfassend
einen Bus (3),
einen an den Bus angekoppelten Coprozessor (2),
einen an den Bus angekoppelten Hauptprozessor (1), und
ein an den Bus angekoppeltes externes Gerät (6),
wobei der Hauptprozessor (1) aufweist:
eine Übertragungseinrichtung (9) zum Übertragen eines Befehls an den Coprozessor, wobei der Befehl auf einer Instruktion beruht, die von einer Aufrufeinrichtung (9) für den Coprozessor aufgerufen wird, und
eine Recheneinrichtung (12) zur Ausführung der Berechnung einer Adresse des externen Gerätes für den Datenübertragungsvorgang,
dadurch **gekennzeichnet**,
daß der Hauptprozessor (1) den Bus-Zugriffszyklus für den Coprozessor ausführt,
daß der Hauptprozessor (1) eine mit einer Datenübertragungsnummer (1) gesetzte erste Setzeinrichtung (29) umfaßt, wobei die Datenübertragungsnummer in dem Befehl enthalten ist und die zwischen dem Coprozessor (2) und dem externen Gerät (6) durchzuführenden Datenübertragungsvorgänge bezeichnet, und wobei der Hauptprozessor eine Einrichtung aufweist, die gemäß der gesetzten Datenübertragungsnummer der ersten Setzeinrichtung das Ende des Datenübertragungsvorgangs unabhängig vom Coprozessor feststellt, und
daß der Coprozessor (2) eine mit der Datenübertragungsnummer gesetzte zweite Setzeinrichtung (34) umfaßt, wobei die Datenübertragungsnummer in dem für den Hauptprozessor vorgesehenen Befehl enthalten ist, und wobei der Coprozessor eine Einrichtung aufweist, die gemäß der gesetzten Datenübertragungsnummer der zweiten Setzeinrichtung das Ende des zwischen einem internen Abschnitt (32) des Coprozessors und dem externen Gerät (6) durchgeführten Datenübertragungsvorgangs feststellt,
wobei der Datenübertragungsvorgang zwischen dem Coprozessor und dem externen Gerät über den Bus ausgeführt wird, ohne den Hauptprozessor zu durchlaufen.

2. Mikroprozessorsystem nach Anspruch 1,
wobei sowohl die erste als auch die zweite Setzeinrichtung eine das erste gesetzte Bit ermittelnde Schaltung (29, 34) ist, und
wobei die das erste gesetzte Bit ermittelnde Schaltung eine Einrichtung umfaßt, die für jeden Datenübertragungsvorgang eine Code-Invertierung an einem vorgegebenen Codebit vornimmt, das in einer Mehrzahl von Bitsätzen enthalten sind, die in die das erste gesetzte Bit ermittelnde Schaltung gesetzt sind, um die Mehrzahl von Bitsätzen aufzufrischen, sowie eine Einrichtung, die ein Ende der Folge von Datenübertragungsvorgängen aufgrund der Bedingung feststellt, daß keiner der aufgefrischten Bitsätze das vorgegebene Codebit enthält.

3. Mikroprozessorsystem nach Anspruch 2, wobei der interne Abschnitt des Coprozessors mehrere Datenspeichereinrichtungen (32) zur Datenspeicherung umfaßt, und wobei die Mehrzahl von Bitsätzen einen vorgegebenen der Mehrzahl von Datenspeichereinrichtungen bezeichnen.

4. Mikroprozessorsystem nach Anspruch 3, wobei jede der das erste gesetzte Bit ermittelnden Schaltungen (29, 34) eine Einrichtung zum Decodieren der Mehrzahl von Bitsätzen umfaßt, um eine der Datenspeichereinrichtungen (32) des Coprozessors zu bezeichnen.

5. Mikroprozessorsystem nach Anspruch 2, wobei der Hauptprozessor (1) eine Einrichtung zur Bildung des dem Coprozessor zuzuführenden Befehls aufgrund der von dem Hauptprozessor aufgerufenen Instruktion umfaßt, wobei der Befehl mehrere Bitsätze enthält, die in die das erste gesetzte Bit ermittelnde Schaltung (34) des Coprozessors (2) zu setzen sind.

6. Mikroprozessorsystem nach Anspruch 3, wobei die Mehrzahl von internen Datenspeichereinrichtungen mehrere Allzweckregister (32) umfaßt.

7. Mikroprozessorsystem nach Anspruch 1, wobei das externe Gerät eine Speichereinrichtung (6) zur Datenspeicherung ist.

8. Verfahren in einem Mikroprozessorsystem, das einen Bus (3), einen an den Bus angekoppelten Hauptprozessor (1), einen an den Bus angekoppelten Coprozessor (2) und ein an den Bus angekoppeltes externes Gerät (6) aufweist, zur Ausführung einer Folge von Datenübertragungsvorgängen zwischen dem externen Gerät und mehreren in den Coprozessor enthaltenen Datenspeichereinrichtungen (32), wobei das Verfahren folgende Schritte umfaßt:
(a) Aufrufen einer vorgegebenen Instruktion für den Coprozessor (2),
(b) Erzeugen eines Befehls für den Coprozessor (2) aufgrund des in dem Aufrufschritt (a) durch den Hauptprozessor (1) aufgerufenen Befehls, und
(c) Zuführen des in dem Befehlsschritt (2) erzeugten Befehls an den Coprozessor,
wobei das Verfahren dadurch **gekennzeichnet** ist,
daß die Bus-Zugriffszyklen von dem Hauptprozessor (1) aktiviert werden, und
daß das Verfahren ferner folgende Schritte umfaßt:
(d) Überwachen eines Endes der Folge von Datenübertragungsvorgängen durch den Hauptprozessor (1) aufgrund einer in dem Befehl enthaltenen Datenübertragungsnummer für den Coprozessor (2), und
(e) Überwachen eines Endes der Folge von Datenübertragungsvorgängen durch den Coprozessor (2) aufgrund einer in dem Befehl enthaltenen Datenübertragungsnummer unabhängig von der durch den Hauptprozessor ausgeführten Überwachung,
wobei die Datenübertragungsvorgänge zwischen dem Coprozessor und dem externen Gerät durch den Bus ausgeführt werden, ohne den Hauptprozessor zu durchlaufen.

9. Verfahren nach Anspruch 8, wobei die durch den Hauptprozessor (1) auszuführende Überwachung einen Schritt umfaßt, bei dem nach Erfassung eines Endes der Folge von Datenübertragungsvorgängen eine Aktivierung eines weiteren Bus-Zugriffszyklus gestoppt wird.

10. Verfahren nach Anspruch 8, wobei die Überwachung durch den Coprozessor (2) einen Schritt umfaßt, bei dem nach Erfassung eines Endes der Folge von Datenübertragungsvorgängen eine Aktivierung eines weiteren Bus-Zugriffszyklus gestoppt wird.

11. Verfahren nach Anspruch 8, ferner umfassend einen Schritt, der funktionsmäßig auf den in dem Befehl enthaltenen Daten beruht, um für jeden Datenübertragungszyklus die als Datenübertragungsquelle oder -ziel für den Coprozessor verwendete Datenspeichereinrichtung zu beurteilen und festzustellen.

12. Verfahren nach Anspruch 11, wobei der Schritt der Feststellung und der Bezeichnung der Datenspeichereinrichtung für jeden Datenübertragungszyklus umfaßt:
für jeden Datenübertragungsvorgang wird eine Code-Inversion an einem in den Daten enthaltenen vorbestimmten Codebit bewirkt, und
für jeden Datenübertragungsvorgang wird aufgrund der Bedingung, daß die Daten das vorgegebene Codebit nicht enthalten, ein Ende der Vorgänge feststellt.

13. Verfahren nach Anspruch 12, wobei die in den Daten enthaltene Mehrzahl von Bits aufgrund einer Kombination jedes Bitcodes eine vorgegebene der in dem Coprozessor (2) enthaltenen Datenspeichereinrichtungen bezeichnet.

## Revendications

1. Système microprocesseur comprenant :
un bus (3);
un coprocesseur (2) couplé au bus;
un processeur maître (1) couplé au bus; et
un dispositif externe (6) couplé au bus;
le processeur maître (1) comprenant
des moyens de transfert (9) pour transférer un ordre au coprocesseur, ledit ordre étant basé sur une instruction extraite par des moyens d'extraction (9) pour le coprocesseur; et
des moyens de calcul (12) pour exécuter le calcul d'une adresse du dispositif externe pour une opération de transfert de données;
caractérisé en ce
que le processeur maître (1) exécute le cycle d'accès au bus pour le coprocesseur;
que le processeur maître (1) comprend
des premiers moyens de sélection (29) positionnés avec un nombre de transferts de données, qui est contenu dans l'ordre et indique les opérations de transfert de données devant être exécutées entre le coprocesseur (2) et le dispositif externe (6), le processeur maître incluant des moyens pour évaluer l'achèvement de l'opération de transfert de données indépendamment du coprocesseur en fonction du nombre sélectionné de transferts de données des premiers moyens de sélection; et
que le coprocesseur (2) comprend
des seconds moyens de sélection (34) positionnés avec le nombre de transferts de données contenu dans l'ordre délivré par le processeur maître, le coprocesseur comprenant des moyens pour évaluer l'achèvement de l'opération de transfert des données exécutée entre une section interne (32) du coprocesseur et le dispositif externe (6) conformément au nombre sélectionné de transferts de données des seconds moyens de sélection, et
dans lequel l'opération de transfert des données entre le coprocesseur et le dispositif externe est exécutée au moyen du bus, sans passer par le processeur maître.

2. Système microprocesseur selon la revendication 1, dans lequel les premiers et seconds moyens de sélection sont constitués par un circuit (29, 34) de détection de premier bit positionné, et
dans lequel le circuit de détection de premier bit positionné comprend des moyens pour appliquer, pour chaque opération de transfert de données, une inversion de code à un bit de code prédéterminé contenu dans une pluralité d'ensembles de bits, qui ont été positionnés dans le circuit de détection du premier ensemble de bits positionnés, de manière à mettre à jour la pluralité d'ensembles de bits, et des moyens permettant d'évaluer un achèvement de la séquence des opérations de transfert de données, sur la base d'une condition selon laquelle aucun des ensembles de bits mis à jour ne contient le bit de code prédéterminé.

3. Système microprocesseur selon la revendication 2, dans lequel ladite section interne du coprocesseur comprend une pluralité de moyens formant mémoire de données (32) pour mémoriser des données, et dans lequel la pluralité d'ensembles de bits désignent l'un prédéterminé de la pluralité de moyens formant mémoire de données.

4. Système microprocesseur selon la revendication 3, dans lequel chacun des circuits (29, 34) de détection des bits du premier ensemble inclut des moyens pour décoder la pluralité d'ensembles de bits pour désigner l'un des moyens formant mémoire de données (32) du coprocesseur.

5. Système microprocesseur selon la revendication 2, dans lequel le processeur maître (1) contient des moyens pour former l'ordre devant être envoyé au coprocesseur sur la base de l'instruction extraite par le processeur maître, l'ordre contenant une pluralité d'ensembles de bits devant être insérés dans le circuit (34) de détection de premier bit positionné, du coprocesseur (2).

6. Système microprocesseur selon la revendication 3, dans lequel la pluralité des moyens internes formant mémoire de données comprend une pluralité de registres à usage général (32).

7. Système microprocesseur selon la revendication 1, dans lequel le dispositif externe est constitué par des moyens de mémoire (6) servant à mémoriser des données.

8. Dans un système microprocesseur, qui contient un bus (3), un processeur maître (1) couplé au bus, un coprocesseur (2) couplé au bus et un dispositif externe (6) couplé au bus, un procédé pour exécuter une séquence d'opérations de transfert de données entre le dispositif externe et une pluralité de moyens formant mémoire de données (32) contenus dans le coprocesseur, le procédé comportant les étapes consistant à :
(a) extraire une instruction prédéterminée pour le coprocesseur (2);
(b) produire un ordre pour le coprocesseur (2) sur la base de l'instruction extraite lors de l'étape d'extraction (a) par le processeur maître (1); et
(c) envoyer au coprocesseur l'ordre produit lors de l'étape (b) de production de l'ordre;
le procédé étant caractérisé
en ce que les cycles d'accès au bus sont activés par le processeur maître (1); et
en ce que le procédé comprend en outre les étapes consistant à
(d) contrôler, au moyen du processeur maître (1), une fin de la séquence d'opérations de transfert de données sur la base d'un nombre de transferts de données contenu dans l'instruction pour le coprocesseur (2); et
(e) contrôler, au moyen du coprocesseur (2), une fin de la séquence d'opérations de transfert de données basées sur un nombre de transferts de données contenu dans l'ordre indépendamment du contrôle effectué par le processeur maître,
les opérations de transfert de données entre le coprocesseur et le dispositif externe étant exécutées par l'intermédiaire du bus, sans passer par le processeur maître.

9. Procédé selon la revendication 8, selon lequel le contrôle devant être exécuté par le processeur maître (1) inclut une étape pour arrêter une activation d'un autre cycle d'accès au bus après la détection d'une fin de la séquence d'opérations de transfert de données.

10. Procédé selon la revendication 8, selon lequel le contrôle par le coprocesseur (2) comprend une étape servant à arrêter une activation d'un autre cycle d'accès au bus après la détection d'une fin de la séquence d'opération de transfert de données.

11. Procédé selon la revendication 8, comprenant en outre une étape basée du point de vue opérationnel sur les données contenues dans l'ordre pour évaluer et désigner, pour chaque cycle de transfert de données, des moyens formant mémoire de données utilisés en tant que source ou destination de transfert de données dans le coprocesseur.

12. Procédé selon la revendication 11, selon lequel l'étape d'évaluation et de désignation, pour chaque cycle de transfert de données, des moyens formant mémoire de données, comprend :
l'application, pour chaque opéation de transfert de données, d'une inversion de code à un bit de code prédéterminé contenu dans les données; et
l'exécution d'une évaluation de l'achèvement d'opérations pour chaque opération de transfert de données sur la base d'une condition selon laquelle les données ne comprennent pas le bit de code prédéterminé.

13. Procédé selon la revendication 12, dans lequel la pluralité de bits contenus dans les données indiquent, sur la base d'une combinaison de chaque code de bit, l'un prédéterminé des moyens formant mémoire de données contenus dans le coprocesseur (2).
